# EUROPEAN PATENT SPECIFICATION

(11) **EP 3 932 633 B1**
(45) Date of publication and mention of the grant of the patent: **18.03.2026**
(21) Application number: 21180559.3
(22) Date of filing: 21.06.2021
(51) Int. Cl.: B26D 1/06, B26D 1/547, A23P 30/20, B26D 5/20, B26D 5/18, B26D 5/08, B26D 5/14, A23P 10/25

(54) **CUTTING ASSEMBLY FOR MIXTURES FOR FOOD USE**
SCHNEIDANORDNUNG FÜR MISCHUNGEN FÜR NAHRUNGSMITTEL
ENSEMBLE DE COUPE POUR MÉLANGES À USAGE ALIMENTAIRE

(30) Priority: 30.06.2020 IT 202000003778 U
(43) Date of publication of application: 05.01.2022
(73) Proprietor: Minipan S.r.l., 48024 Massa Lombarda (RA) (IT)
(72) Inventor: LANDI, Alessandro, 48012 Bagnacavallo RA (IT); FOSSA, Marco, 48010 Cotignola RA (IT)
(74) Representative: Modiano, Micaela Nadia

(56) References cited:
- EP-A1- 3 766 352
- KR-Y1- 200 172 996
- US-A1- 2017 203 455

## Description

The present invention relates to a cutting assembly for mixtures for food use: in particular the assembly is adapted to be installed downstream of an extruder, for the purpose of severing the mixture flowing out therefrom according to preset dimensions.

The mixtures for food use are generally obtained via the processing of flours (which can be of various types) with water and other ingredients.

These mixtures undergo a rising process at the end of which they can be subdivided into portions of predefined volume, or mass, which will be given specific shapes.

The formats thus created can in turn be cut according to the final production standards of the product that it is intended to obtain, prior to being subjected to cooking.

In many cases the forming of the end product is obtained with an extrusion process in which the mixture (accommodated in a hopper) is conveyed through at least one opening (of predefined shape and dimensions) from which it exits as a continuous bar with a constant cross-section (and corresponding to the specified standards). The completion of the product (attribution of the specified length) is obtained in a subsequent step of cutting to a format.

The cutting operations are normally carried out using blades actuated with an alternating motion which, periodically, interfere with the bar of mixture flowing out from the extrusion head and subdivide it into portions of predefined length. US2017203455 discloses a known cutting assembly according to the preamble of claim 1.

This type of cutting is suitable only for low to medium extrusion speeds of the mixture format.

At increased extrusion speeds, the cutting is far less precise and can lead to deformations of the portions obtained from the bar of mixture.

The use is known of rotating cutting assemblies which are provided with blades arranged according to the corners of a polygon, with a substantially radial orientation. The rotation of the assembly brings each cutter to assume the cutting configuration, with respect to the bar of mixture, cyclically.

This type of assemblies makes it possible to handle greater advancement speeds of the mixture format on the conveyor belt, but can still lead to deformations of the portions (the rotation of the cutter can push a front of the piece of mixture, modifying its shape and/or dimensions).

The principal aim of the present invention is to solve the above mentioned drawbacks, by providing a cutting assembly for mixtures for food use that can operate substantially at any extrusion speed of the mixture.

Within this aim, an object of the invention is to provide a cutting assembly for mixtures for food use that is versatile, therefore adapted to execute any type of cut on the bar of mixture with any frequency.

Another object of the invention is to provide a cutting assembly for mixtures for food use that does not damage or deform, or generically modify, the shape and/or the dimensions of the mixture.

Another object of the present invention is to provide a cutting station for mixtures for food use which is of low cost, easily and practically implemented and safe in use.

This aim and these and other objects that will become more apparent hereinafter are achieved by a cutting assembly according to claim 1.

Further characteristics and advantages of the invention will become better apparent from the detailed description that follows of a preferred, but not exclusive, embodiment of the cutting assembly for mixtures for food use according to the invention, which is illustrated by way of non-limiting example in the accompanying drawings, wherein:

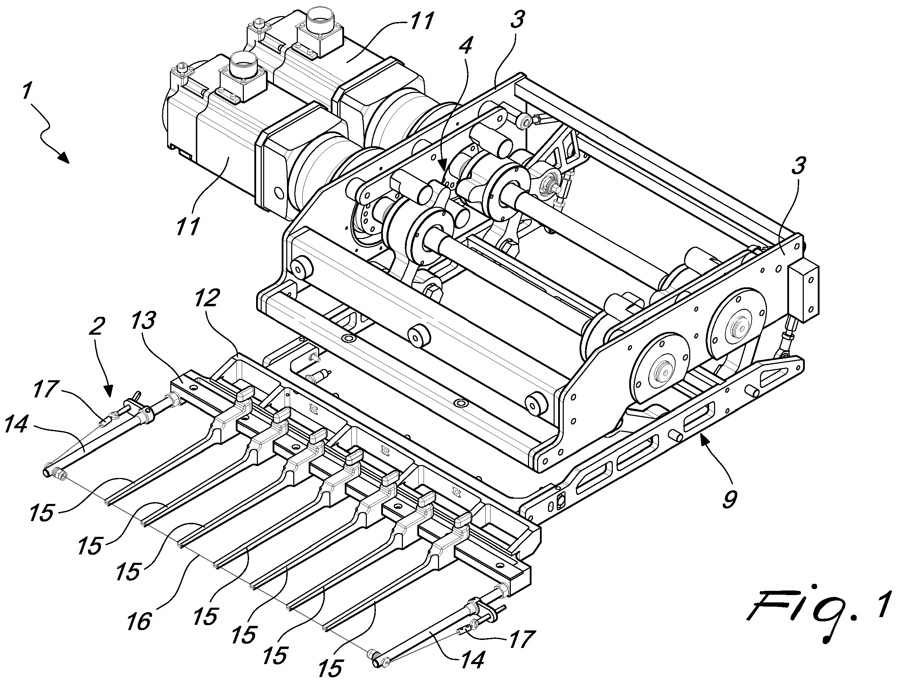

Figure 1 is a schematic perspective view of a cutting assembly for mixtures for food use according to the invention;

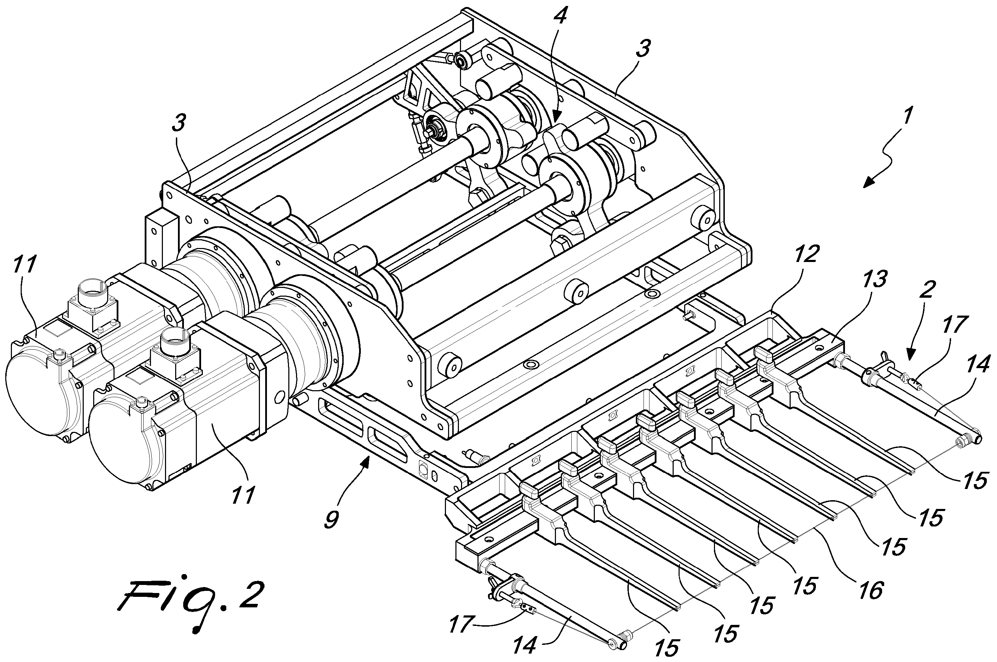

Figure 2 is a further schematic perspective view of the cutting assembly of Figure 1;

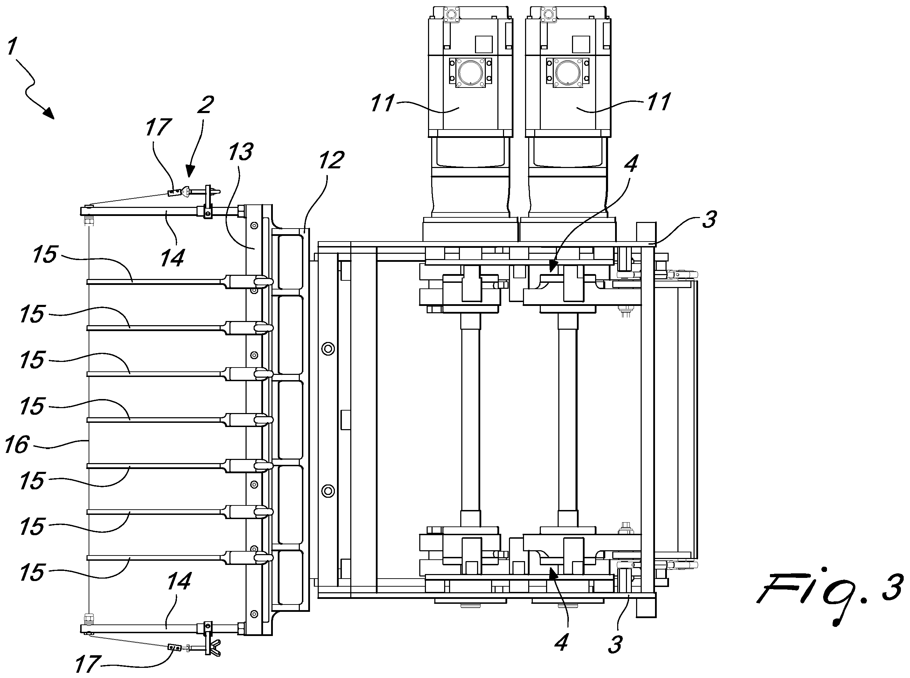

Figure 3 is a schematic view from above of the cutting assembly of Figure 1;

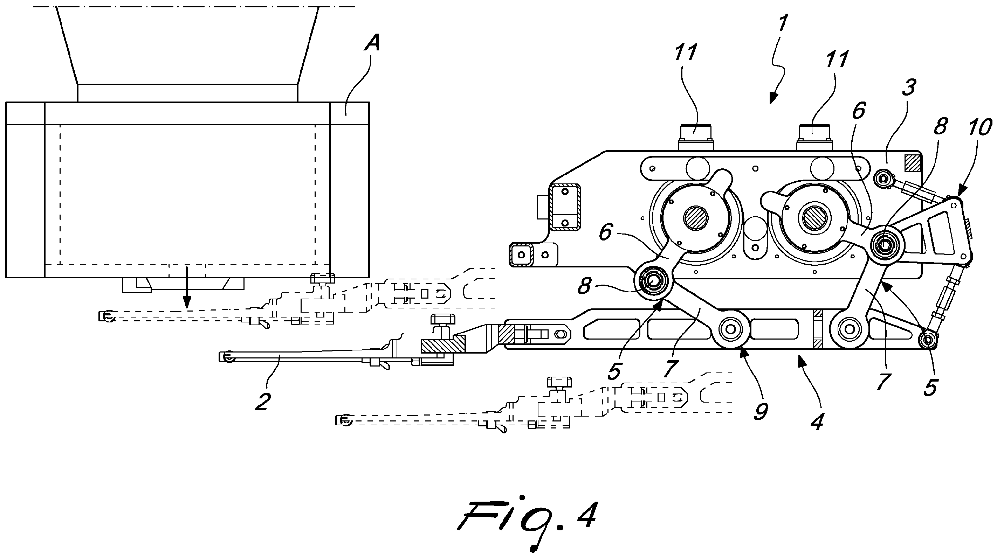

Figure 4 is a partially cross-sectional schematic side view of the cutting assembly of Figure 1 in different active positions.

With particular reference to the figures, the reference numeral 1 generally designates a cutting assembly for mixtures for food use.

The assembly 1 is intended to be integrated and/or associated with an apparatus for the production of food products, in particular oven-baked products.

This apparatus will comprise a dispenser A of at least one continuous element B constituted by a mixture for food use, with respect to which a cutter 2 of the cutting assembly 1 will have to carry out the portioning according to the specified size standards for the end product (the single portions of mixture will be subjected to a process of baking in an industrial oven).

According to the invention the at least one cutter 2 will have to be facing the outlet of the dispensing apparatus A.

The assembly 1 according to the invention comprises a fixed frame 3 which is rigidly coupled, and proximate, to the dispensing apparatus A, at least one motorized automatic follower mechanism 4, supporting the at least one cutter 2 and coupled to the frame 3.

The assembly 1 further comprises a control and management unit controlled by the dispensing apparatus A and designed to control the at least one actuator of the at least one motorized automatic follower mechanism 4.

In tandem with the dispensing of the continuous element of mixture by the apparatus A, the cutter 2 will be moved by the motorized automatic follower mechanism 4 so that it follows the advancement of the element of mixture during the cutting operation: this operation ensures a high degree of precision of the cut even when the dispensing of the element of mixture is done at high speed, because the cutter 2 follows the element itself without the possibility of there being relative movements between the two.

The control and management unit, therefore, since the law of motion of the dispensing apparatus A is known (generally it will be a linear motion of the element of mixture at constant speed) will be able to control the actuators present in the follower mechanism 4 to execute a following cut.

In particular, the control and management unit will control the actuators of the assembly 4 to execute a first movement that ensures the preventive alignment of the cutter 2 with the region of the element of mixture to be cut; the actuators will then proceed to make the cutter 2 advance until it notches the element of mixture B; subsequently the actuators will execute a vertical movement of the cutter 2, in the configuration of cutting the element of mixture, for a portion of predefined length, while moving at the same speed as the dispensing of the mixture by the apparatus A; in a final step of the cutting operation, the cutter 2 will be made to retreat again and the actuators will lift it by executing the above mentioned first movement (thus returning it to the initial position).

The assembly 1 according to the invention offers great versatility and therefore makes it possible to manage the speed of entry of the cutter 2 into the element of mixture, by synchronizing the motion of the cutter 2 with that of the underlying dispensing apparatus A and by managing the exit speed of the cutter 2 itself from the element on which it has carried out the cut.

Another peculiarity of the assembly 1 is the possibility of setting the vertical stroke so that, if elements of mixture of different thickness are to be cut, it will be possible to program the initial position of the cutter 2 at the start of the cycle, thus making it possible to adapt the assembly 1 according to the invention to the execution of any specific cutting operation on any element of mixture.

It should be noted that the assembly 4 will also make it possible to give the cutter 2 a simple alternating motion (that of a traditional guillotine cutter) that is sufficient in cases where the element of mixture is dispensed by the apparatus A at low speed.

The at least one motorized automatic follower mechanism 4 comprises at least one pair of articulated arms 5, each one constituted by a pair of levers 6, 7 which are mutually hinged at an end 8 thereof.

The free end of the second levers 7 is joined rotatably to a plate 9 which is designed, directly or indirectly, for retaining the cutter 2.

In this embodiment, it should be noted that the pairs of articulated arms 5 can conveniently comprise at least two controlled motors 11, which are controlled by the control and management unit and are coupled to the initial end, which is rotatable with respect to the frame 3, of the articulated arms 5 (in particular of the first levers 6).

It should be noted that the pairs 5 of articulated arms will preferably be two in number, at least one of which will usefully comprise an additional lever mechanism 10, which is articulated with respect to the frame 3 and with respect to corresponding portions of the pair 5 of articulated arms, defining, therewith, an articulated quadrilateral.

The controlled motors 11 controlled by the control and management unit will be brushless motors and therefore will allow complete control of the movements of the plate 9 (and therefore of the cutter 2), behaving like an electronic cam (designed to define a law of motion that can be programmed via the control and management unit).

The choice fell on brushless motors because these make it possible to obtain the best results in terms of control of their dynamics.

It should furthermore be noted that the at least one motorized automatic follower mechanism 4 comprises at least one removable and interchangeable retaining bracket 12 for at least one respective cutter 2.

Generally, the cutter 2 can have a shape structure preferably chosen from among laminar of slender thickness, filament-like of slender thickness, contoured for the specific creation of cutting lines on the fronts of the subdivided portions of mixture, and the like.

With particular reference to the implementation solution shown by way of non-limiting example in the accompanying figures, the cutter 2 will conveniently comprise a supporting beam 13 (which can be removably coupled to the bracket 12 for possible substitution) provided with arms 14 that protrude frontally at its heads and with at least one supporting stem 15 interposed between and parallel to the arms 14.

On the terminal ends of the arms 14 and of the at least one supporting stem 15 there will positively be a wire 16 which is tensioned mechanically and is designed to exert the cutting action on the mixture for food use.

The correct mechanical tension of the wire 16 will be obtained by way of respective conventional tensioners 17.

The present invention also extends its protection to include any apparatus for processing mixtures for food use which comprises a dispensing apparatus A of at least one element of mixture for food use that comprises the cutting assembly 1.

It should be noted that the dispensing apparatus A of at least one element of mixture for food use is preferably chosen from an extruder and a lamination element. In particular the assembly 1 according to the invention will be particularly effective when it will be used for portioning a continuous element of mixture exiting from an extruder.

In relation to the apparatus that comprises the assembly 1 according to the invention, it should be noted that it can comprise respective fixed elements for mechanically cleaning the surfaces of the cutter 2, if such operation is necessary owing to specific characteristics of the mixture being processed.

The fixed cleaning elements could, for example, be constituted by mutually facing brushes or spatulas, through which the cutter 2 can be made to translate, so that the bristles of the brushes or the end edge of the spatulas can remove the residues of mixture from the surfaces of the cutter 2.

The assembly 1 according to the invention is particularly versatile in that it can be installed in any apparatus for processing mixtures for food use, even to substitute conventional cutting stations.

The assembly 1 according to the invention makes it possible to execute optimal cutting operations even at high dispensing speeds of the element of mixture by the dispenser A.

Purely for the purposes of example, it should be noted that the station is capable of executing approximately 300 cuts per minute, thus ensuring a variable cut length within a fairly broad range (starting from a few millimeters), on an element of mixture B that has a cross-section set by the shape and dimensions of the extrusion head.

It should conveniently be noted that the assembly 1 according to the invention and any apparatus that comprises it can advantageously operate on mixtures for food use that are based on cereal flours of leavened and/or non-leavened type, and also on mixtures for food use of different types.

Advantageously the present invention solves the above mentioned problems, by providing a cutting assembly 1 for mixtures for food use that can operate substantially at any translation speed of the mixture dispensed by the apparatus A.

Conveniently the assembly 1 according to the invention is particularly versatile, being adapted to execute any type of cut on the mixture with any frequency.

Positively the cutting assembly 1 according to the invention does not damage and does not deform (in general it does not modify the shape and/or the dimensions) the mixture when executing the cutting operations.

Positively the cutting assembly 1 according to the invention is easily and practically implemented and is of low cost: such characteristics make the assembly 1 according to the invention an innovation that is safe in use.

## Claims

1. A cutting assembly for mixtures for food use, of the type adapted for functional connection to a dispensing apparatus (A) of at least one continuous element constituted by a mixture for food use, and which is provided with at least one cutter (2) facing toward the exit of said dispensing apparatus (A), wherein the cutting assembly comprises:
- a fixed frame (3) which is rigidly coupled, and proximate, to said dispensing apparatus (A),
- at least one motorized automatic follower mechanism (4), supporting the at least one said cutter (2) and coupled to said frame (3),
- a control and management unit controlled by the said dispensing apparatus (A) and designed to control the at least one actuator of said at least one motorized automatic follower mechanism (4) **characterized in that** said at least one motorized automatic follower mechanism (4) comprises at least one pair of articulated arms (5), each one constituted by a pair of levers (6, 7) which are mutually hinged at an end (8) thereof, a free end of said second levers (7) being joined rotatably to a plate (9) which is designed, directly or indirectly, for retaining said cutter (2).

2. The cutting assembly according to claim 1, **characterized in that** said pair of articulated arms (5) comprises at least two controlled motors (11), which are controlled by said control and management unit and are coupled to the initial end, which is rotatable with respect to said frame (3), of said articulated arms (5).

3. The cutting assembly according to claim 2, **characterized in that** said pairs of articulated arms (5) are two in number, at least one of which comprises an additional lever mechanism (10) which is articulated with respect to said frame (3) and to respective portions of said pair (5) of articulated arms, defining, therewith, an articulated quadrilateral.

4. The cutting assembly according to claim 2, **characterized in that** said controlled motors (11) controlled by said control and management unit are brushless motors.

5. The cutting assembly according to claim 1, **characterized in that** at least one motorized automatic follower mechanism (4) comprises at least one removable and interchangeable retaining bracket (12) for at least one respective cutter (2).

6. The cutting assembly according to one or more of the preceding claims, **characterized in that** said cutter (2) has a shape structure preferably chosen from among laminar of slender thickness, filament-like of slender thickness, contoured for the specific creation of cutting lines on the fronts of the subdivided portions of mixture, and the like.

7. The cutting assembly according to claim 6, **characterized in that** said cutter (2) comprises a supporting beam (13) provided with arms (14) that protrude frontally at its heads and with at least one supporting stem (15) interposed between and parallel to said arms (14), on the terminal ends of said arms (14) and of said at least one supporting stem (15) there being a wire (16) which is tensioned mechanically and is designed to exert the cutting action on the mixture for food use.

8. An apparatus for processing mixtures for food use, which comprises a dispensing apparatus (A) of at least one element of mixture for food use with substantially continuous longitudinal extension, **characterized in that** it comprises a cutting assembly (1) according to any one of preceding claims.

9. The apparatus according to the preceding claim, **characterized in that** said dispensing assembly (A) of at least one element of mixture for food use with substantially continuous longitudinal extension is preferably chosen from an extruder and a lamination element.

## Patentansprüche

1. Eine Schneideanordnung für Mischungen für Nahrungsmittel, von der Art, die zur funktionellen Verbindung mit einer Abgabevorrichtung (A) mindestens eines durchgängigen Elements geeignet ist, das aus einer Mischung für den Lebensmittelgebrauch besteht und die mit mindestens einer Schneidevorrichtung (2) versehen ist, die dem Ausgang der Abgabevorrichtung (A) zugewandt ist, wobei die Schneideanordnung Folgendes umfasst:
- einen festen Rahmen (3), der starr mit der Abgabevorrichtung (A) gekoppelt ist und an sie angrenzt,
- mindestens einen motorisierten automatischen Mitnehmermechanismus (4), der die mindestens eine Schneidevorrichtung (2) trägt und mit dem Rahmen (3) gekoppelt ist,
- eine Steuerungs- und Verwaltungseinheit, gesteuert von der Abgabevorrichtung (A) und konstruiert, um den mindestens einen Antrieb des mindestens einen motorisierten automatischen Mitnehmermechanismus (4) zu steuern; **dadurch gekennzeichnet, dass** der mindestens eine motorisierte automatische Mitnehmermechanismus (4) mindestens ein Paar von Gelenkarmen (5) umfasst, die jeweils aus einem Paar von Hebeln (6, 7) bestehen, die an einem Ende (8) derselben gelenkig miteinander verbunden sind; wobei ein freies Ende der zweiten Hebel (7) drehbar mit einer Platte (9) verbunden ist, welche dazu dient, die Schneidevorrichtung (2) direkt oder indirekt zu halten.

2. Die Schneidanordnung gemäß Anspruch 1, **dadurch gekennzeichnet, dass** das Paar von Gelenkarmen (5) mindestens zwei gesteuerte Motoren (11) umfasst, die von der Steuerungs- und Verwaltungseinheit gesteuert und mit dem Ausgangsende der Gelenkarme (5), das mit Bezug auf den Rahmen (3) drehbar ist, gekoppelt sind.

3. Die Schneidanordnung gemäß Anspruch 2, **dadurch gekennzeichnet, dass** die Paare von Gelenkarmen (5) zwei an der Zahl sind, wobei mindestens einer davon einen zusätzlichen Hebelmechanismus (10) umfasst, welcher mit Bezug auf den Rahmen (3) und auf entsprechende Abschnitte des Paares (5) von Gelenkarmen gelenkig ist und damit ein gelenkiges Viereck bestimmt.

4. Die Schneidanordnung gemäß Anspruch 2, **dadurch gekennzeichnet, dass** die gesteuerten Motoren (11), die von der Steuerungs- und Verwaltungseinheit gesteuert sind, Brushless-Motoren sind.

5. Die Schneidanordnung gemäß Anspruch 1, **dadurch gekennzeichnet, dass** der mindestens eine motorisierte automatische Mitnehmermechanismus (4) mindestens eine abnehmbare und austauschbare Halteklammer (12) für mindestens eine entsprechende Schneidevorrichtung (2) umfasst.

6. Die Schneidanordnung gemäß einem oder mehreren der obigen Ansprüche, **dadurch gekennzeichnet, dass** die Schneidevorrichtung (2) eine Struktur hat, die vorzugsweise gewählt ist aus laminar mit geringer Dicke, filamentartig mit geringer Dicke, konturiert zur spezifischen Erzeugung von Schneidlinien auf den Vorderseiten der unterteilten Portionen der Mischung und dergleichen.

7. Die Schneidanordnung gemäß Anspruch 6, **dadurch gekennzeichnet, dass** die Schneidevorrichtung (2) einen tragenden Pfeiler (13) umfasst, ausgestattet mit Armen (14), die frontal an seinen Köpfen vorstehen, und mit mindestens einem tragenden Schaft (15), der zwischen den Armen (14) und parallel zu ihnen angeordnet ist, wobei sich an den Enden der Arme (14) und des mindestens einen tragenden Schafts (15) ein Draht (16) befindet, der mechanisch gespannt ist und dazu dient, die Schneidwirkung auf die Mischung für Nahrungsmittel auszuüben.

8. Eine Vorrichtung zur Verarbeitung von Mischungen für Nahrungsmittel, die eine Abgabevorrichtung (A) mindestens eines Mischungselements für Lebensmittel mit im Wesentlichen durchgehender Längsausdehnung umfasst, **dadurch gekennzeichnet, dass** sie eine Schneidanordnung (1) gemäß einem beliebigen der obigen Ansprüche umfasst.

9. Die Vorrichtung gemäß dem obigen Anspruch, **dadurch gekennzeichnet, dass** die Abgabevorrichtung (A) mindestens eines Mischungselements für Lebensmittel mit im Wesentlichen durchgehender Längsausdehnung vorzugsweise aus einem Extruder und einem Laminierelement gewählt ist.

## Revendications

1. Ensemble de coupe pour mélanges à usage alimentaire, du type adapté pour être relié fonctionnellement à un dispositif de distribution (A) d'au moins un élément continu constitué d'un mélange à usage alimentaire, et qui est muni d'au moins un couteau (2) tourné vers la sortie dudit dispositif de distribution (A), où l'ensemble de coupe comprend :
- un châssis fixe (3) qui est couplé de manière rigide, et à proximité, audit appareil de distribution (A),
- au moins un mécanisme suiveur automatique motorisé (4), supportant ledit au moins un couteau (2) et couplé audit châssis (3),
- une unité de commande et de gestion commandée par ledit appareil de distribution (A) et conçue pour commander le au moins un actionneur dudit au moins un mécanisme suiveur automatique motorisé (4), **caractérisé en ce que** ledit au moins un mécanisme suiveur automatique motorisé (4) comprend au moins une paire de bras articulés (5), chacun constitué d'une paire de leviers (6, 7) qui sont articulés mutuellement à une extrémité (8) de ceux-ci, une extrémité libre desdits seconds leviers (7) étant reliée de manière rotative à une plaque (9) qui est conçue,
directement ou indirectement, pour retenir ledit couteau (2).

2. Ensemble de coupe selon la revendication 1, **caractérisé en ce que** ladite paire de bras articulés (5) comprend au moins deux moteurs commandés (11), qui sont commandés par ladite unité de commande et de gestion et sont couplés à l'extrémité initiale, qui est rotative par rapport audit châssis (3), desdits bras articulés (5).

3. Ensemble de coupe selon la revendication 2, **caractérisé en ce que** lesdites paires de bras articulés (5) soient au nombre de deux, dont au moins une comprend un mécanisme à levier supplémentaire (10) qui est articulé par rapport audit châssis (3) et à des parties respectives de ladite paire (5) de bras articulés, définissant ainsi un quadrilatère articulé.

4. Ensemble de coupe selon la revendication 2, **caractérisé en ce que** lesdits moteurs commandés (11) commandés par ladite unité de commande et de gestion sont des moteurs sans balais.

5. Ensemble de coupe selon la revendication 1, **caractérisé en ce qu'**au moins un mécanisme suiveur automatique motorisé (4) comprend au moins un support de retenue amovible et interchangeable (12) pour au moins un couteau respectif (2).

6. Ensemble de coupe selon une ou plusieurs des revendications précédentes, **caractérisé en ce que** ledit couteau (2) a une structure de forme choisie de préférence parmi les formes laminaires d'épaisseur mince, les formes filiformes d'épaisseur mince, les formes profilées pour la création spécifique de lignes de coupe sur les faces avant des parties subdivisées du mélange, et similaires.

7. L'ensemble de coupe selon la revendication 6, **caractérisé en ce que** ledit couteau (2) comprend une poutre de support (13) pourvue de bras (14) qui font saillie frontalement à ses têtes et d'au moins une tige de support (15) interposée entre et parallèle auxdits bras (14), sur les extrémités terminales desdits bras (14) et de ladite au moins une tige de support (15), un fil métallique (16) étant tendu mécaniquement et conçu pour exercer l'action de coupe sur le mélange destiné à l'alimentation.

8. Appareil pour traiter des mélanges destinés à l'alimentation, qui comprend un dispositif de distribution (A) d'au moins un élément du mélange destiné à l'alimentation, avec une extension longitudinale sensiblement continue, **caractérisé en ce qu'**il comprend un ensemble de coupe (1) selon l'une quelconque des revendications précédentes.

9. L'appareil selon la revendication précédente, **caractérisé en ce que** ledit ensemble de distribution (A) d'au moins un élément de mélange destiné à l'alimentation, avec une extension longitudinale sensiblement continue, est de préférence choisi parmi une extrudeuse et un élément de laminage.
